Europäisches Patentamt

European Patent Office

Office européen des brevets

(11) Numéro de publication: **0 256 931 B1**

## (12) FASCICULE DE BREVET EUROPEEN

(45) Date de publication de fascicule du brevet:
11.12.91

(51) Int. Cl.⁵: **B62D 65/00**

(21) Numéro de dépôt: **87401817.9**

(22) Date de dépôt: **05.08.87**

(54) **Véhicule automobile construit par assemblage de modules.**

(30) Priorité: **06.08.86 FR 8611412**

(43) Date de publication de la demande:
**24.02.88 Bulletin  88/08**

(45) Mention de la délivrance du brevet:
**11.12.91 Bulletin  91/50**

(84) Etats contractants désignés:
**DE GB IT**

(56) Documents cités:
**EP-A- 0 029 212      EP-A- 0 029 214**
**EP-A- 0 029 549      EP-A- 0 084 712**
**EP-A- 0 127 146      DE-C- 839 314**
**FR-A- 1 106 142      GB-A- 1 309 278**

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **FROUMAJOU Armand**
**11bis, rue du Docteur Laennec**
**95520 OSNY(FR)**

(74) Mandataire: **Beauchamps, Georges et al**
**Cabinet Z.Weinstein 20, avenue de Friedland**
**F-75008 Paris(FR)**

## Description

La présente invention a essentiellement pour objet un véhicule automobile dont au moins certaines parties sont construites par assemblage de modules.

Il est déjà connu dans l'industrie automobile de construire par exemple la partie avant d'un véhicule automobile à l'aide d'un certain nombre de modules qui sont assemblés sur la caisse.

La construction du véhicule à l'aide de modules présente l'intérêt de raccourcir le temps de montage final sur la caisse, mais surtout de faciliter le montage et la vérification des divers sous-ensembles constituant chaque module.

Cependant, on conçoit que les modules doivent être non seulement fixés à la caisse, mais également connectés avec les autres modules, ces connexions pouvant être de nature électrique et/ou fluidique selon les cas.

Or, jusqu'à présent, ces connexions étaient effectuées de manière indépendante et leur réalisation n'avait pas de rapport avec le découpage en modules. Autrement dit, les moyens de connexion étaient réalisés de manière séparée et pouvaient poser des problèmes au niveau des coûts et du raccordement qui, on le comprend, peut être délicat lorsqu'il s'agit d'effectuer une construction par modules, c'est-à-dire un assemblage d'une pluralité d'éléments plus ou moins imbriqués les uns dans les autres.

Par ailleurs, on a proposé d'après le document GB-A-1 309 278 (correspondant au préambule de la revendication 1) de raccorder deux véhicules tout en assurant la connexion électrique et hydraulique entre eux. Mais ce document ne permet pas de résoudre le problème de la construction modulaire et simplifiée de la partie avant d'un véhicule automobile.

La présente invention a pour but de résoudre notamment les problèmes ci-dessus en proposant une conception de modules qui est peu coûteuse et permet de réaliser automatiquement toutes les connexions lors du montage.

A cet effet, l'invention a pour objet un véhicule automobile construit par assemblage de modules juxtaposables et raccordables munis de moyens assurant automatiquement la connexion électrique et/ou hydraulique d'un module à l'autre lors de l'assemblage des modules, caractérisé en ce que lesdits modules, au nombre de trois, forment la partie avant du véhicule et comprennent un module comportant notamment un tablier, une planche de bord et une colonne de direction; un module comportant un berceau supportant notamment un groupe moto-propulseur et une suspension; et un module comportant notamment une platine de face avant supportant des projecteurs, les connexions électriques entre ces trois modules étant réalisées par un boîtier de connexion prévu sur deux modules et par deux boîtiers de connexion prévus sur un module, tandis que les connexions fluidiques entre deux modules sont assurées par un boîtier de connexion prévu sur chacun de ces deux modules.

On précisera encore ici que chaque boîtier de connexion des modules comporte des ergots de centrage coopérant avec des trous prévus dans le boîtier de connexion d'un autre module.

Suivant une autre caractéristique de l'invention, chaque boîtier de connexion est monté de manière fixe ou déplaçable sur le module auquel il appartient.

Mais d'autres caractéristiques et avantages de l'invention apparaîtront mieux dans la description détaillée qui suit et se réfère qux dessins annexés, donnés uniquement à titre d'exemple, et dans lesquels:

La figure 1 est une vue très schématique d'une construction modulaire selon les principes de l'invention.

La figure 2 est une vue en coupe verticale de deux boîtiers de connexion électrique appartenant chacun à un module et montés avant raccordement.

La figure 3 est une vue similaire à la figure 2, mais montrant deux boîtiers de connexion hydraulique.

Les figures 4 et 6 sont des vues en coupe verticale suivant deux plans différents, de la partie avant d'un véhicule automobile construit selon les principes de l'invention. Et

Les figures 5 et 7 sont des vues en plant de dessus avec coupes partielles de cette partie avant.

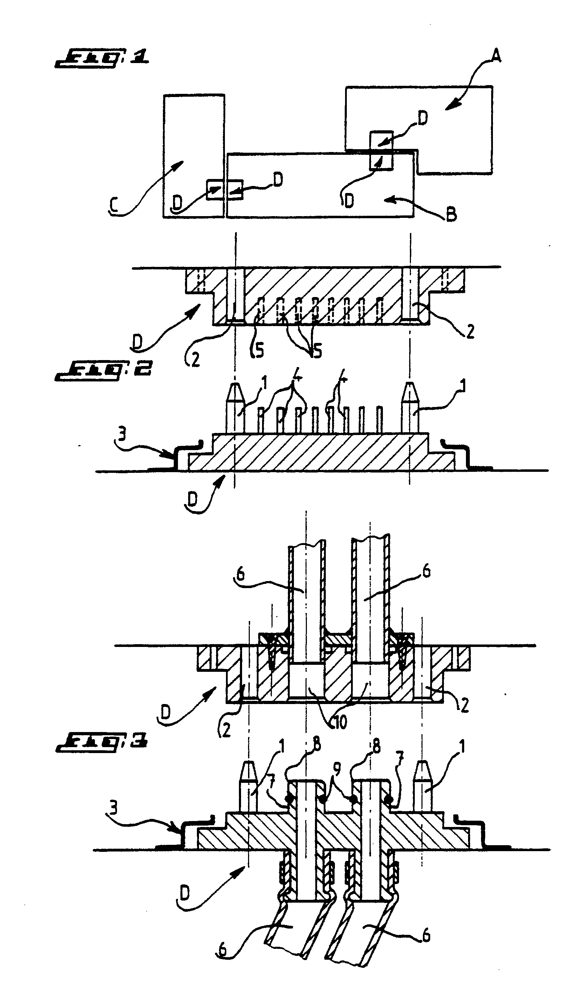

En se reportant à la figure 1, on voit qu'un véhicule construit suivant les principes de l'invention peut comporter une partie avant constituée par exemple de trois modules A, B et C, chaque module comprenant un boîtier D assurant automatiquement la connexion électrique et/ou hydraulique du module A au module B et du module B au module C, lors de l'assemblage des trois modules.

Les boîtiers D s'étendent suivant une direction correspondant à la direction de montage des modules. Ainsi, on voit sur la figure 1 que les boîtiers D appartenant respectivement aux modules A et B s'étendent suivant une direction verticale puisque l'assemblage des modules A et B s'effectue dans le sens vertical. Par contre, l'assemblage des modules B et C s'effectuant suivant l'horizontale, les boîtiers D sont orientés eux aussi dans le sens horizontal. Les modules A, B et C peuvent comporter chacun divers organes du véhicule comme on le verra plus loin, mais l'un des modules peut parfaitement servir de relais entre deux modules. Ainsi, le module B pourrait constituer un relais entre les modules A et C comprenant des organes du véhicule.

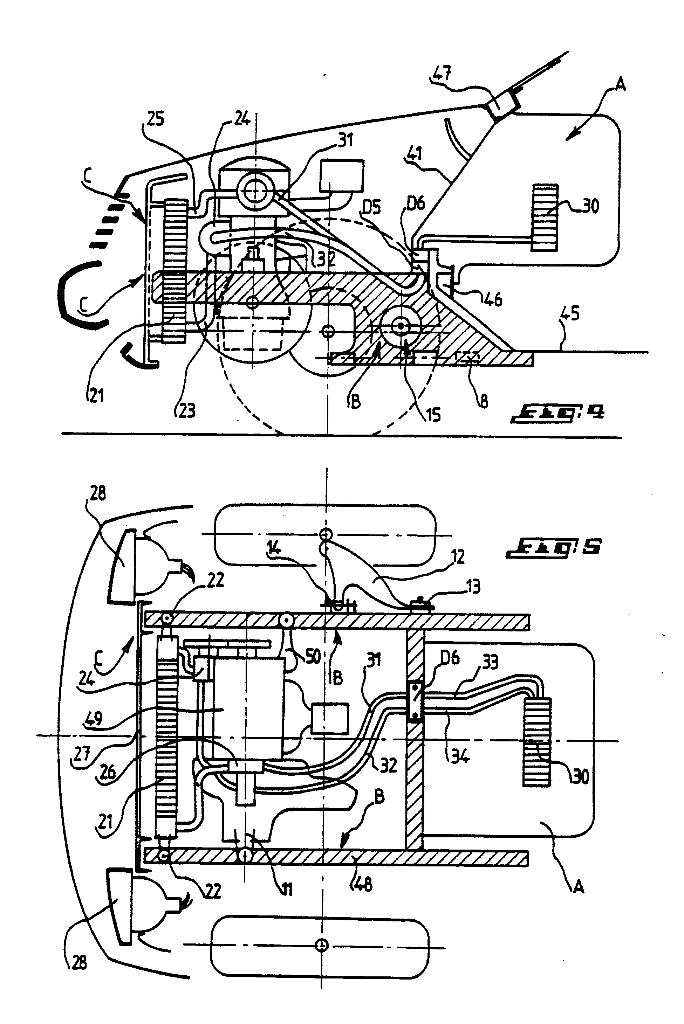

Comme on le voit sur la figure 2, le boîtier D d'un module peut comporter des ergots, pions ou analogues 1 coopérant avec des trous 2 prévus dans le boîtier D d'un autre module. L'un des boîtiers D, à savoir ici celui représenté à la partie inférieure de la figure 2, peut être monté relativement déplaçable par rapport au module auquel il est associé, et cela grâce à, par exemple, un système de glissière, montré schématiquement en 3. Ainsi, l'un des boîtiers pourra se déplacer par rapport à l'autre qui est fixe, de manière à positionner correctement les pions de centrage 1 pour permettre la connexion entre les deux boîtiers D, L'un des boîtiers D montré sur la figure 2 comporte des broches ou analogues 4 susceptibles de s'enficher dans des logements correspondants 5 ménagés sur l'autre boîtier afin d'assurer la connexion électrique après assemblage des deux modules.

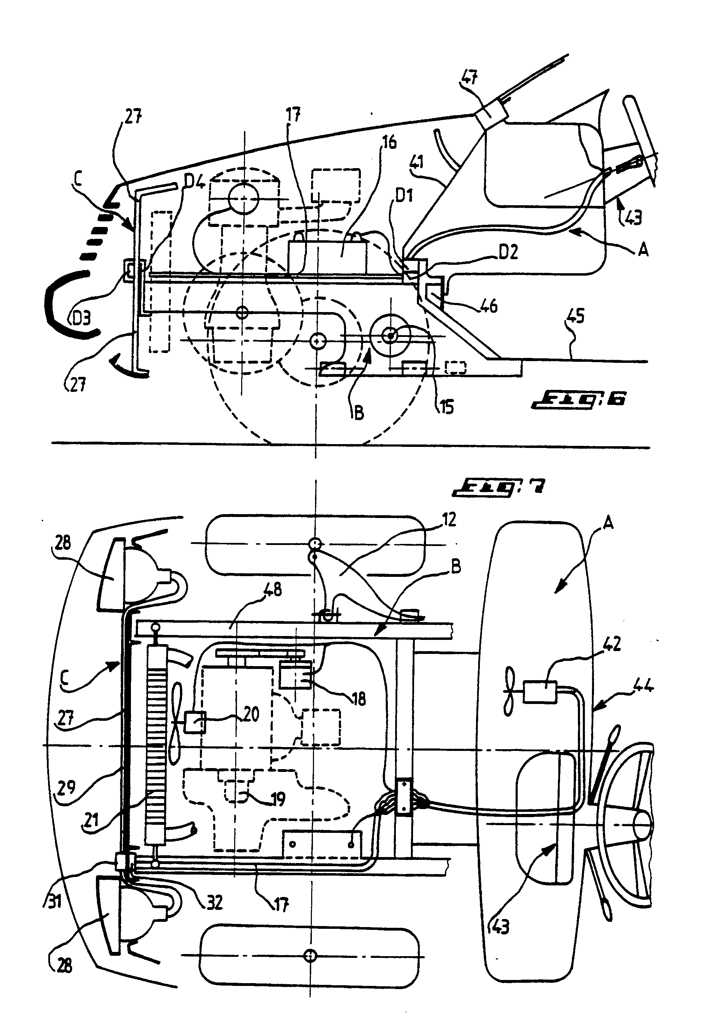

En se reportant à la figure 3, on voit deux boîtiers D appartenant chacun à un module qui comporte les mêmes éléments de centrage que ceux de la figure 2, à savoir le système de glissière 3, les ergots de centrage 1 et les trous 2 recevant les ergots 1. Mais ici, il s'agit e deux boîtiers permettant une connexion fluidique et comportant chacun des conduites 6. Plus précisément, le boîtier D déplaçable ou flottant, montré à la partie inférieure de la figure 3, comporte des embouts tubulaires 7 munis chacun d'un chanfrein 8 et d'un joint torique 9. Les embouts tubulaires 8 peuvent ainsi coopérer de manière étanche avec des alésages 10 prévus dans le boîtier fixe D montré à la partie supérieure de la figure 3.

Il est parfaitement possible, sans sortir du cadre de l'invention, de grouper sur un boîtier D les deux fonctions représentées sur les figures 2 et 3, ce qui permettrait évidement de faire l'économie d'un moyen de centrage.

On ajoutera encore ici que l'enfichage des boîtiers de connexion peut parfaitement être effectué par un robot de montage, étant entendu qu'en phase finale de montage, les ergots de centrage 1 et la mobilité de l'une des boîtiers D par rapport à l'autre qui est fixe permettront un enfichage précis et parfait.

On se reportera maintenant aux figures 4 à 7 pour donner un exemple d'application de la technique d'assemblages de modules ci-dessus décrite à la partie avant d'un véhicule comprenant trois modules pré-assemblés, tels que A, B et C, qui viennent se monter sur la structure du véhicule.

Comme on le voit sur les figures 4, 6 et 7, le module A comprend notamment une paroi formant tablier 41, un ensemble de climatisation 42, un ensemble colonne de direction 43, une planche de bord 44 et un ensemble pédalier.

La structure du véhicule comprend entre autres un plancher 45, ainsi qu'une traverse avant 46 de plancher et une traverse 47 de baie sur lesquels vient s'accoster le module A, en effectuant le déplacement de ce module depuis l'arrière vers l'avant du véhicule.

Le module B comprend essentiellement un berceau 48 bien visible sur la figure 5, et qui supporte un groupe moto-propulseur 49 au moyen de supports 50 et 11, un triangle de suspension avant 12 relié au berceau 48 par des paliers 13 et 14, et une crémaillère de direction visible en 15 sur les figures 4 et 6.

Le berceau 48 peut également supporter, comme on le voit sur la figure 6, une batterie 16 et un faisceau électrique 17 réalisant l'ensemble des connexions internes du module B, c'est-à-dire les connexions entre la batterie 16, l'alternateur 18, l'allumeur 19, l'alimentation du ventilateur de refroidissement 20, ces trois derniers éléments étant bien visibles sur la figure 7, étant entendu que le faisceau 17 pourra encore assurer la liaison électrique entre d'autres moyens qui n'ont pas besoin d'être décrits ici.

Le module B peut encore comporter le radiateur 21 de refroidissement du moteur, que est monté sur le berceau 48 par exemple au moyen de supports 22. Grâce à cette disposition, il est donc possible d'effectuer le prémontage des durits du circuit de refroidissement du moteur. On a montré en 23 sur la figure 4, une durit reliant le radiateur 21 à la pompe à eau 24, et en 25 une durit reliant le radiateur 21 à la sortie d'eau 26, visible sur la figure 5.

Le module C comprend une pièce principale constituée par une platine de face avant 27 servant de support à des projecteurs 28.

On a montré en 29 sur la figure 7 un faisceau électrique intégré au module C et permettant de centraliser toutes les alimentations en un point unique.

Toutes les connexions électriques entre le module A et le module B sont réalisées, comme on le voit bien sur la figure 6, par un boîtier de connexion $D_1$ appartenant au module A et par un boîtier de connexion $D_2$ appartenant au module B.

Les connexions électriques entre le module B et le module C sont réalisées par un boîtier de connexion $D_3$ appartenant au module C et par un boîtier de connexion $D_4$ appartenant au module B, ces boîtiers étant également représentés sur la figure 6.

On comprend donc qu'en effectuant les opérations successives de montage, on établit les connexions électriques non seulement entre deux modules voisins tels que A et B, mais aussi entre deux modules éloignés tels que A et C, le faisceau électrique 17 du module B servant de relais entre les boîtiers de connexion $D_2$ et $D_4$. Une telle disposition est très avantageuse en ce qu'elle supprime tout câblage sur la structure du véhicule pour l'alimentation des projecteurs 28.

Par ailleurs, comme expliqué précédemment, la connexion électrique entre les modules A et B s'effectue automatiquement lors de l'assemblage desdit modules.

Comme on l'a décrit précédemment à propos de la figure 3, la connexion automatique peut également être appliquée pour les fluides nécessaires au véhicule.

C'est ainsi que l'on a représenté sur les figures 4 et 5 un circuit d'alimentation en eau chaude d'un aérotherme 30 par le moteur du véhicule, ce circuit se trouvant en partie dans le module A (aérotherme), et en partie dans le module B (moteur).

Ce circuit comprend une durit 31 partant du boîtier de sortie d'eau 26 du moteur et une durit 32 ramenant l'eau à l'entrée de la pompe à eau 24. Ces deux durits aboutissent à un boîtier $D_5$ faisant partie du module B. Quant à l'aérotherme 30 du module A, il comporte une entrée et une sortie d'eau 33, 34 reliées à un boîtier de connexion $D_6$ appartenant audit module A. Les boîtiers de connexion fluidique $D_5$, $D_6$ présentent la forme représentée sur la figure 3.

Bien entendu, l'invention n'est nullement limitée au mode de réalisation décrit et illustré qui n'a été donné qu'à titre d'exemple. C'est ainsi que l'invention pourrait s'appliquer à des parties du véhicule autres que la partie avant. Egalement, on pourrait envisager la création d'un module comprenant des canalisations de frein et raccordées, par des moyens de connexion tels que ceux représentés sur la figure 3, à des éléments du circuit de freinage.

## Revendications

1. Véhicule automobile construit par assemblage de modules juxtaposables et raccordables (A, B, C) munis de moyens assurant automatiquement la connexion électrique et/ou hydraulique d'un module à l'autre lors de l'assemblage des modules, caractérisé en ce que lesdits modules, au nombre de trois, forment la partie avant du véhicule et comprennent un module (A) comportant notamment un tablier (41), une planche de bord (44) et une colonne de direction (43) ; un module (B) comportant un berceau (48) supportant notamment un groupe moto-propulseur (49) et une suspension (12) ; et un module (C) comportant notamment une platine de face avant (27) supportant des projecteurs (28), les connexions électriques entre ces trois modules (A, B, C) étant réalisées par un boîtier de connexion ($D_1$, $D_3$) prévu sur deux modules (A, C) et par deux boîtiers de connexion ($D_2$, $D_4$) prévus sur un module (B), tandis que les connexions fluidiques entre deux modules (A, B) sont assurées par un boîtier de connexion ($D_5$, $D_6$) prévu sur chacun de ces deux modules.

2. Véhicule selon la revendication 1, caractérisé en ce que chaque boîtier de connexion des modules (A, B, C) comporte des ergots de centrage (1) coopérant avec des trous (2) prévus dans le boîtier de connexion d'un autre module.

3. Véhicule selon la revendication 1 ou 2, caractérisé en ce que chaque boîtier de connexion est monté de manière fixe ou déplaçable sur le module auquel il appartient.

## Claims

1. Automotive vehicle built by assembling juxtaposable and connectable modules (A,B,C) provided with means automatically ensuring the electric and/or hydraulic connection of one module to the other one upon the assembly of the modules, characterized in that the said modules in a number of three form the front portion of the vehicle and comprise a module (A) in particular including an apron (41), an instrument board (44) and a steering column (43); a module (B) comprising a cradle (48) in particular supporting an engine-driven propelling unit (49) and a suspension (12); and a module (C) in particular comprising a front face plate (27) supporting the headlights (28), the electrical connections between these three modules (A,B,C) being achieved by one junction box ($D_1$,$D_3$) provided on two modules (A,C) and by two junction boxes ($D_2$,$D_4$) provided on one module (B) whereas the fluidic connections between two modules (A,B) are ensured by a junction box ($D_5$,$D_6$) provided on each one of these two modules.

2. Vehicle according to claim 1, characterized in that each junction box of the modules (A,B,C) comprises centring pins (1) co-operating with holes (2) provided in the junction box of another module.

3. Vehicle according to claim 1 or 2, characterized in that each junction box is mounted in a stationary or displaceable manner onto the module to which it belongs.

## Patentansprüche

1. Durch Zusammenfügen von nebeneinander setztbaren und verbindbaren Modulen (A,B,C) gebautes Kraftfahrzeug, welche mit, den elektrischen und/oder hydraulischen Anschluss eines Moduls an einen anderen bei dem Zusammenfügen der Module selbsttätig bewirkenden Mitteln versehen sind, dadurch gekennzeichnet, dass die besagten Module in an einer Anzahl von drei den Vorderteil des Fahrzeugs bilden und einen insbesondere eine Schürzentafel (41), ein Armaturenbrett (44) und eine Lenksäule (43) aufweisenden Modul (A); einen, einen insbesondere ein Fahrantriebswerk (49) und einer Aufhängung (12) tragenden Sattel (48) aufweisenden Modul (B); und einen insbesondere eine die Hauptscheinwerfer (28) tragende vordere Stirnplatte (27) aufweisenden Modul (C) umfassen, wobei die elektrischen Anschlüsse zwischen diesen drei Modulen (A,B,C) durch einen zwischen zwei Modulen (A,C) vorgesehenen Anschlusskasten $(D_1, D_3)$ und durch zwei an einem Modul (B) vorgesehenen Anschlusskasten $(D_2, D_4)$ hergestellt werden, während die fluidischen Verbindungen zwischen zwei Modulen (A,B) durch einen an jedem dieser beiden Modulen vorgesehenen Anschlusskasten $(D_5, D_6)$ gewährleistet werden.

2. Fahrzeug nach Anspruch 1, dadurch gekennzeichnet, dass jeder Kasten zum Anschluss der Modulen (A,B,C) mit in dem Anschlusskasten eines anderen Moduls vorgesehenen Löchern zusammenwirkende Zentriertstifte (1) aufweist.

3. Fahrzeug nach Anspruch 1 oder 2, dadurch gekennzeichnet, dass jeder Anschlusskasten in ortsfester Weise oder beweglich an dem Modul, zu welchem er gehört, angeordnet ist.

EP 0 256 931 B1

**FIG. 1**

**FIG. 2**

**FIG. 3**

6

Fig. 4

Fig. 5

Fig.6

Fig.7